# EUROPEAN PATENT APPLICATION

(11) **EP 4 312 164 A1**
(43) Date of publication of application: **31.01.2024**
(21) Application number: 22187426.6
(22) Date of filing: 28.07.2022
(51) Int. Cl.: G06N 20/00

(54) **APPARATUS AND METHOD FOR TRAINING A LEARNING MODEL IN A COMMUNICATION NETWORK**

(71) Applicant: Nokia Technologies Oy, 02610 Espoo (FI)
(72) Inventor: SUBRAMANYA, Tejas, Munich (DE); GIUST, Fabio, Pullach (DE); AGGARWAL, Chaitanya, Munich (DE)
(74) Representative: Nokia EPO representatives

(57) **Abstract**

Apparatus and methods are proposed for use in a communication network.

The apparatus participating in a training iteration of a learning model are assigned a role amongst at least a training role and a master verifying role, the master verifying role including a verifying role.

For the training iteration i, the apparatus obtain global parameters for a global learning model, and generate a set of local parameters by training the global learning model with local data.

Apparatus for which the obtained role is the training role provide the set of local parameters to the apparatus for which the obtained role is the verifying role. The sets of local parameters are ranked by the apparatus for which the obtained role is the verifying role.

The apparatus for which the obtained role is the master verifying role selects one or more sets of local parameters based on said ranking.

Then global parameters are generated for a next training iteration from the selected sets of local parameters, and the training roles are determining for the next training iteration.

## Description

### TECHNICAL FIELD

Various example embodiments relate generally to apparatus and methods for use in a communication network.

In particular, the disclosed apparatus and methods apply to training a global learning model in new generations of wireless communication networks and have many applications for example for data production or analytics production.

### BACKGROUND

In federated learning (also known as collaborative learning), a learning model is trained across multiple apparatus on local data hold by each apparatus, without exchanging the local data between the apparatus. The learning model is trained locally by each apparatus on the local data hold by the apparatus and the parameters obtained are exchanged between apparatus.

Federated learning enables to build a global learning model without sharing local data, thus allowing to address critical issues such as data privacy, data security, data access rights, access to heterogeneous data, etc...

However known federated learning solutions are not robust enough for certain use cases in new generations wireless communication networks.

### SUMMARY

According to some aspects, there is provided the subject matter of the independent claims. Some further aspects are defined in the dependent claims.

According to a first aspect, a first apparatus is disclosed, for use in a communication network comprising a plurality of apparatus, the first apparatus comprising training means for training a global learning model with a plurality of training iterations, the training means comprising
- means for obtaining roles for a training iteration, for said first apparatus and for at least one other apparatus of the plurality of apparatus in the communication network, amongst at least a training role and a master verifying role, the master verifying role including a verifying role,
- means for obtaining global parameters for the global learning model,
- means for generating a set of local parameters by training the global learning model with local data,
- means for providing the set of local parameters to the at least one other apparatus for which the obtained role is the verifying role, when the role obtained for said first apparatus is the training role,
- means for ranking the sets of local parameters obtained from the at least one other apparatus for which the obtained role is the training role, when the role obtained for said first apparatus is the verifying role,
- means for selecting one or more sets of local parameters based on said ranking, when the role obtained for said first apparatus is the master verifying role,
- means for generating global parameters for a next training iteration from the selected sets of local parameters and for determining roles for the next iteration when the role obtained for said first apparatus is the master verifying role, or in response to obtaining the selected sets of local parameters from the apparatus for which the obtained role is the master verifying role when the role obtained for said first apparatus is the training role.

In first embodiment, the means for ranking a set of local parameters obtained from an apparatus for which the obtained role is the training role comprise computing a distance between the set of local parameters generated by said first apparatus and the obtained set of local parameters..

In a second embodiment, the means for selecting one or more sets of local parameters comprise determining a final ranking from several rankings obtained in relation to the same received set of local parameters, and selecting the sets of local parameters which final ranking meets a selection criterion.

In a third embodiment, the apparatus further comprises means for providing the selected set of local parameters to the apparatus for which the obtained role is the training role that generated the set of local parameters with the best ranking, when the role obtained for said first apparatus is the master verifying role..

According to a second aspect, a first apparatus is disclosed, for use in a communication network comprising a plurality of apparatus, the first apparatus comprising circuitry configured to perform:
- obtaining roles for a training iteration, for said first apparatus and for at least one other apparatus of the plurality of apparatus in the communication network, amongst at least a training role and a master verifying role, the master verifying role including a verifying role,
- obtaining global parameters for the global learning model,
- generating a set of local parameters by training the global learning model with local data,
- providing the set of local parameters to the at least one other apparatus for which the obtained role is the verifying role, when the role obtained for said first apparatus is the training role,
- ranking the sets of local parameters obtained from the at least one other apparatus for which the obtained role is the training role, when the role obtained for said first apparatus is the verifying role,
- selecting one or more sets of local parameters based on said ranking, when the role obtained for said first apparatus is the master verifying role,
- generating global parameters for a next training iteration from the selected sets of local parameters and determining roles for the next iteration when the role obtained for said first apparatus is the master verifying role, or in response to obtaining the selected sets of local parameters from the apparatus for which the obtained role is the master verifying role when the role obtained for said first apparatus is the training role.

According to a third aspect, a method is disclosed for use in a first apparatus in a communication network comprising a plurality of apparatus, the method comprising training a global learning model with a plurality of training iterations, the training comprising:
- obtaining roles for a training iteration, for the first apparatus and for at least one other apparatus in the communication network, amongst at least a training role and a master verifying role, the master verifying role including a verifying role,
- obtaining global parameters for the global learning model,
- generating a set of local parameters by training the global learning model with local data,
- providing the set of local parameters to the at least one other apparatus for which the obtained role is the verifying role, when the role obtained for said first apparatus is the training role,
- ranking the sets of local parameters obtained from the at least one other apparatus for which the obtained role is the training role, when the role obtained for said first apparatus is the verifying role,
- selecting one or more sets of local parameters based on said ranking, when the role obtained for said first apparatus is the master verifying role,
- generating global parameters for a next training iteration from the selected sets of local parameters and determining roles for the next training iteration when the role obtained for said first apparatus is the master verifying role, or in response to obtaining the selected sets of local parameters from the apparatus for which the obtained role is the master verifying role when the role obtained for said first apparatus is the training role.

According to a fourth aspect, a computer program product is disclosed, comprising a set of instructions which, when executed on an apparatus in a communication network, cause said apparatus to implement the method as disclosed herein.

According to a fifth aspect, an apparatus is disclosed comprising means for registering with a repository in the communication network, through a registration message, the registration message comprising a piece of information indicating whether the apparatus supports the method as disclosed herein. In an embodiment the apparatus further comprises means for discovering other apparatus in the communication network that support a method as disclosed herein.

According to a sixth aspect, a data structure is disclosed for registration with a repository by an apparatus in a communication network, the data structure comprising a piece of information indicating whether the apparatus supports a method as disclosed herein, for example a federated learning method as disclosed herein.

In a first application, an analytics producer comprises an apparatus as disclosed herein, wherein the global learning model is intended to produce analytics for an analytics aggregator or an analytics consumer in the communication network.

In a second application, a user equipment suitable for sidelink communication comprises an apparatus as disclosed herein, wherein the global learning model is intended to produce data for a base station in the communication network. For example the user equipment are vehicles and the data are vehicles position data.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 is a block diagram representing a first embodiment of a communication network with a plurality of apparatus as disclosed herein.
FIG. 2 is a block diagram representing a second embodiment of a communication network with a plurality of apparatus as disclosed herein.
FIG.3 is a block diagram of a method as disclosed herein.
FIG.4 is a connection flow diagram corresponding to the training phase of the method described in FIG.3.
FIG.5. is a connection flow diagram of a first embodiment of the method described in FIG.3.
FIG.6 is a connection flow diagram of a second embodiment the method described in FIG.3.
FIG.7 is a schematic diagram of an example embodiment of an apparatus suitable for storing a computer program product comprising a set of instructions which, when executed on the apparatus, cause the apparatus to implement the method described herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

The present disclosure relates to machine learning in communication networks in general. There are various applications of machine learning in communication networks, for example the production of data or the production of analytics. This is not limitative.

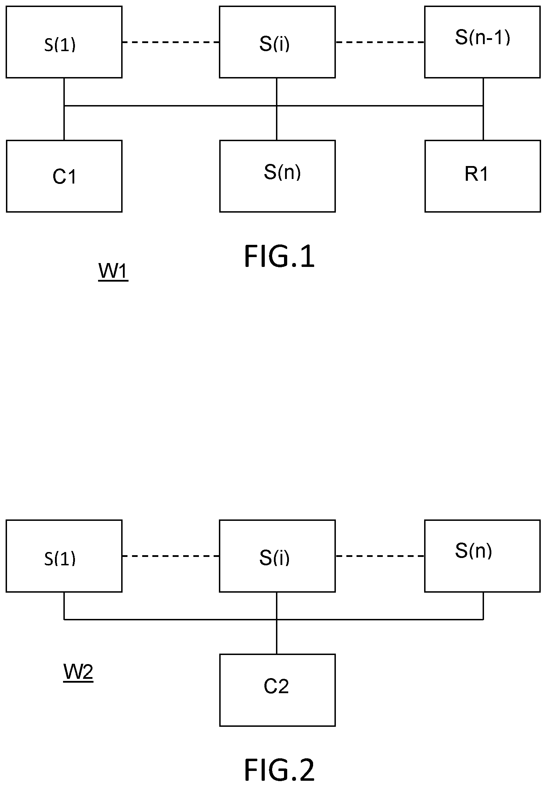

FIG.1 depicts a communication network W1 comprising a consumer C1, a repository R1, and n apparatus S(1), ..., S(i), ..., S(n) with i=1,..., n.

Each of the consumer C1, the repository R1 and the apparatus S(i) can be a single or a distributed apparatus.

In the embodiment depicted in FIG.1, the apparatus S(1) to S(n) comprise a producer of information. The apparatus S(n) additionally comprises an aggregator to aggregate the information produced by the apparatus S(1) to S(n) and deliver the aggregated information to the consumer C1. Both the consumer C1 and the apparatus S(n) can access to the repository R1 to discover apparatus in the network.

In an embodiment, the communication network W1 implements analytics aggregation as described in 3GPP TS 23.288 section 6.1A. In this embodiment, the information produced is analytics. Using 3GPP TS 23.288 terminology, in this embodiment:
- the consumer function C1 is a Network Data Analytics Function (NWDAF) service consumer,
- the apparatus S(1) to S(n-1) is a Network Data Analytics Function (NWDAF),
- the apparatus S(n) is an aggregation point (also referred to as aggregator NWDAF),
- the repository R1 is a Network Repository Function (NRF) which provides a record of all NWDAFs available in the communication network W1 together with a profile of each NWDAF.

FIG.2 depicts a communication network W2 comprising a consumer C2 and n apparatus S(1),..., S(i), ..., S(n) with i=1,...,n. In the embodiment depicted in FIG.2, the apparatus S(1) to S(n) comprises a producer of information to deliver information to the consumer C2.

In an embodiment, the communication network W2 is a V2X communication network. In this embodiment, the information produced is data, for example position data. Using 3GPP terminology, the consumer C2 is a gNodeB (gNB) base station and the apparatus S(1),..., S(i), ..., S(n) are user equipment (UE). User equipment use sidelink (SL) communication to communicate between themselves without participation of the base station.

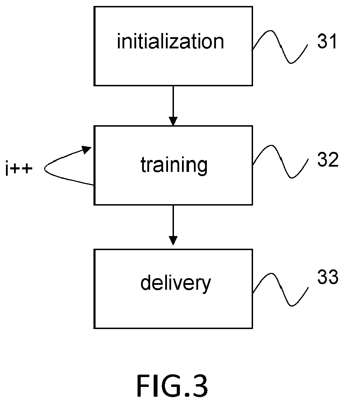

FIG.3 depicts the main phases of a method as disclosed herein. The method comprises 3 main phases: a phase of initialization 31, a phase of training 32 comprising at least two training iterations, and a phase of information delivery 33.

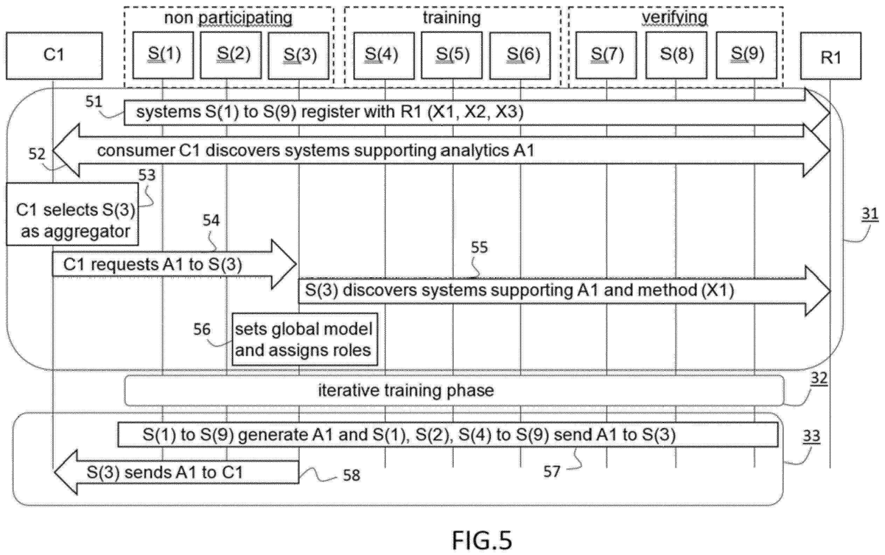

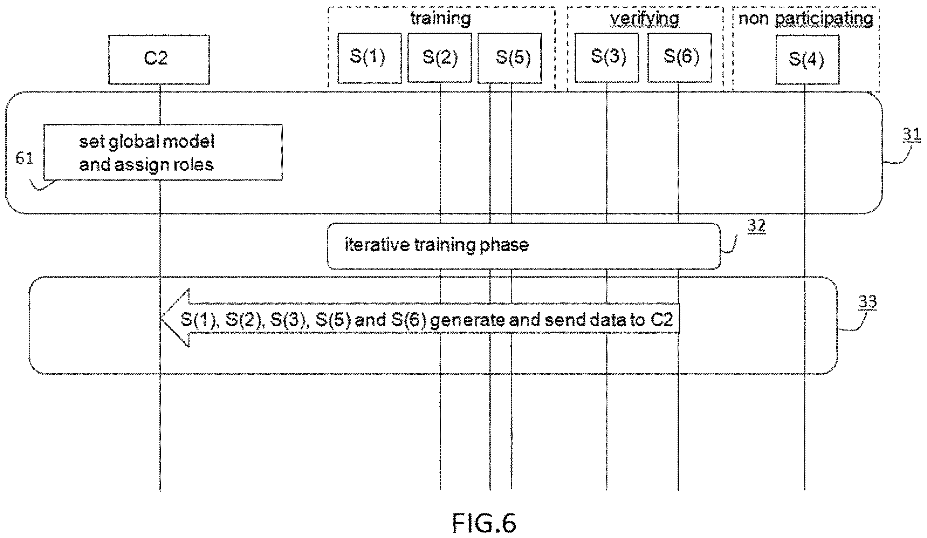

The initialization phase 31 and the delivery phase 33 vary depending on the use case. Two examples will be given in the following of the description in relation to FIG.5 and FIG.6 respectively.

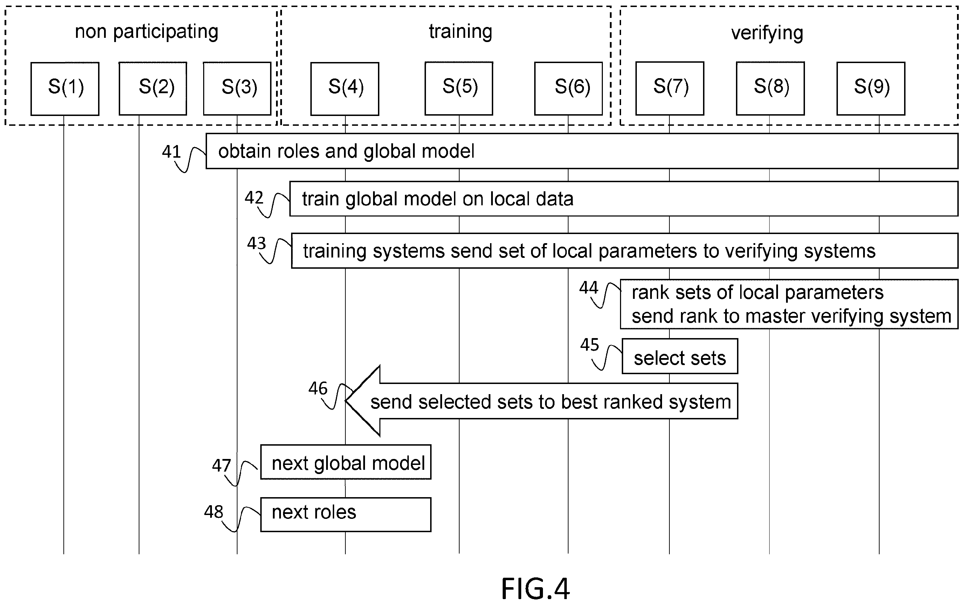

The training phase 32 will now be described in detail with reference to FIG.4 which depicts the steps performed for a training iteration i.

In the embodiment depicted in FIG.4, the communication network comprises 9 apparatus S(1) to S(9). The apparatus S(4) to S(9) are participating to the training iteration i. The apparatus S(1) to S(3) are not participating to the training iteration i.

In the following of the description the term local data, used in relation to a particular apparatus, refers to data that are obtained locally by this particular apparatus. There is no need to share the local data of a particular apparatus with other apparatus for the purpose of training. The term local data includes both data and data analytics depending on the use case.

The term local of parameters refers to parameters generated locally by a particular apparatus based on the local data of this particular apparatus.

The term global learning model refers to a learning model which is used by all apparatus participating to the training iteration i. The parameters defining the global learning model are referred to as global parameters.

During a training iteration i, each apparatus participating to the training iteration i (also referred to as participating apparatus) train a global learning model with its local data and generate a set of local parameters which is shared with other participating apparatus. For the first iteration (i=1), the global learning model is determined during the initialization phase 31. The global learning model is common to all apparatus participating in the training iteration i.

The participating apparatus are assigned a role for the training iteration i. They are assigned either a training role or a verifying role. When several participating apparatus are assigned the verifying role, one of them is assigned a master verifying role. The master verifying role includes the verifying role and an additional master function. When only one participating apparatus is assigned the verifying role, it is assigned the master verifying role.

In the embodiment depicted in FIG.4, the apparatus S(4) to S(6) are assigned the training role, the apparatus S(7) to S(9) are assigned the verifying role, and the apparatus S(7) is assigned the master verifying role. For the first training iteration (i=1), the roles are assigned in the initialization phase 31. In the following of the description, the participating apparatus that are assigned the training role are referred to as training apparatus, the participating apparatus that are assigned the verifying role are referred to as verifying apparatus and the participating apparatus that is assigned the master verifying role is referred to as master verifying apparatus.

At step 41, the participating apparatus S(4) to S(9) obtain the roles assigned for training iteration i and the global parameters to be used for training iteration i.

At step 42, the participating apparatus S(4) to S(9) generate a set of local parameters by training the global learning model with their local data.

At step 43, the training apparatus S(4) to S(6) provide their sets of local parameters to the verifying apparatus S(7) to S(9) which include the master verifying apparatus.

At step 44, the verifying apparatus S(7) to S(9) rank the sets of local parameters obtained from the training apparatus S(4) to S(6). The verifying apparatus S(8) and S(9) send their ranking to the master verifying apparatus S(7).

At step 45, the master verifying apparatus S(7) selects one or more sets of local parameters based on the rankings.

At step 46, the master verifying apparatus S(7) determines the training apparatus which set of local parameters has the best rank (S(4) in FIG.4) and sends the selected sets of local parameters to that training apparatus (also referred to as best ranked training apparatus).

At step 47, the best ranked training apparatus S(4) determines the global parameters for the next training iteration i+1 from the selected sets of local parameters.

At step 48, the training apparatus S(4) determines the roles for the apparatus S(1) to S(9) for the next training iteration i+1. In the example depicted in FIG.4, for iteration i+1, the apparatus S(1) and S(2) are assigned the verifying role, the apparatus S(3) is assigned the master verifying role, and the apparatus S(6), S(7) and S(8) are assigned the training role. Apparatus S(4) and S(9) are not participating in training iteration i+1.

In an alternative embodiment not depicted here, step 46 doesn't exist and the master verifying apparatus S(7) executes steps 47 and 48.

In an embodiment, the ranking of the sets of local parameters at step 44 is performed with a ranking algorithm based on a distance between the set of local parameters generated locally by the verifying apparatus itself and the set of local parameters obtained from the training apparatus at step 43. For example, the distance is an Euclidean distance. The ranking algorithm depends on the objective of the training. For example, considering that the best ranking is the highest ranking, when the global model is being trained to capture better the distributions of the apparatus, the ranking is low (respectively high) when the distance is low (respectively high). On the contrary, when the global model is being trained to detect and avoid the participation of malicious apparatus, the ranking is low (respectively high) when the distance is high (respectively low).

The selection performed by the master verifying apparatus at step 45 includes determining a final ranking for a particular set of local parameters based on all rankings obtained for that particular set of training parameters. In an embodiment the final ranking is determined by averaging all rankings for the same set of local parameters. The selection further includes determining the sets of local parameters which final ranking meets a selection criterion. In an embodiment the criterion is a threshold: sets of local parameters which ranking is above a threshold are selected to be used at step 47 for the determination of the global parameters for the next training iteration,

The roles assigned to the apparatus for an iteration are determined in the initialization phase 31 for the first iteration, or at step 48 for the following iterations. In an embodiment this determination is done randomly. In another embodiment this determination is done based on a particular strategy.

FIG.5 is a connection flow diagram of an embodiment of the method as described in FIG.3 in a communication network implementing analytics aggregation as described in relation to FIG.1.

In the embodiment depicted in FIG.5, the communication network comprises a consumer function C1, a repository function R1, and 9 apparatus S(1) to S(9) implementing a Network Data Analytics Function NWDAF.

The initialization phase 31 comprises steps 51 to 56 as described below.

At step 51, the apparatus register with the repository function R1. This registration process includes sending a registration message comprising a piece of information X1 indicating whether the apparatus supports the method as disclosed herein. The registration message also includes one or more tracking area identities X2 (TAI in 3GPP terminology) which indicates the area served by the apparatus (NWDAF), and an analytics identifier X3 (Analytics ID in 3GPP terminology) which indicated the type of supported analytics that the apparatus (NWDAF) can generate.

At step 52, the consumer function C1, discovers the apparatus supporting the analytics of interest referred to as A1. The consumer function C1 obtains from the repository function R1 the candidate apparatus for analytics A1.

At step 53, the consumer function C1 selects, amongst the candidates, one of the apparatus which has aggregation capabilities and a large serving area. In FIG.5, the selected apparatus is S(3).

At step 54, the consumer function C1 sends a request for analytics A1 to the apparatus S(3).

At step 55, the apparatus S(3) discovers through the repository function R1 the other apparatus that support analytics A1 and the method as disclosed herein.

At step 56, the apparatus S(3) initiates the federated learning process by choosing the algorithm and hyperparameters for the global model and assigning roles to other apparatus for the first iteration. In the embodiment depicted in FIG.5, apparatus S(7) to S(9) are randomly assigned the verifying role with apparatus S(7) being assigned the master verifying role, while apparatus S(4) to S(6) are randomly assigned the training role. Apparatus S(1) to S(3) are not participating for the first training iteration.

The training phase 32 comprises several iterations as described with reference to FIG.4. Once the global model is trained, the method proceeds with the delivery phase 33. During the delivery phase 33, at step 57, all apparatus S(1) to S(9) generate their analytics A1 and, except for apparatus S(3), send their analytics to apparatus S(3) for aggregation. At step 58, the apparatus S(3) aggregates all analytics including its own analytics and send them to the consumer function C1.

In the learning method as disclosed with reference to FIG.5, different NWDAFs may take different roles in each training iteration with respect to performing the local training, verifying sets of local parameters generated locally and aggregating the sets of local parameters. The set of local parameters are exchanged directly between interconnected NWDAFs without the need of orchestration by a central NWDAF. Therefore, single point failures are prevented. Not needing a reliable/trusted central NWDAF is also an advantage in multi-vendor collaborative scenario.

FIG.6 is a connection flow diagram of an embodiment of the method described in FIG.3 in a V2X communication network as described in relation to FIG.2.

In the embodiment depicted in FIG.6, the communication network comprises 6 apparatus S(1) to S(6) which are user equipment (UE). The consumer C2 is a base station (gNodeB in 3GPP terminology).

In the embodiment depicted in FIG.6, the initialization phase 31 comprises one step 61. At step 61, the base station C2 initiates the learning process by choosing the algorithm and hyperparameters for the global model and assigning roles to the apparatus S(1) to S(6) for the first iteration. In the embodiment depicted in FIG.6, apparatus S(3) and S(6) are randomly assigned the verifying role, with apparatus S(3) being assigned the master verifying role. Apparatus S(1), S(2) and S(5) are randomly assigned the training role. Apparatus S(4) is not participating for the first training iteration.

The training phase 32 comprises several iterations as described with reference to FIG.4. Once the global model is trained, the method proceeds with the delivery phase 33. During the delivery phase 33, all apparatus S(1) to S(6) generate their data and send them to the consumer C2 (the base station).

In the method as disclosed with reference to FIG.6, there is no need for the base station to receive the sets of local parameters from all participating UEs and send global parameters to all participating UEs over the radio interface. This significantly reduces the radio resources needed to implement the learning method in such an environment. Additionally, different UEs may take different roles in each training iteration with respect to performing the local training, verifying sets of local parameters generated locally and aggregating the sets of local parameters. UEs don't need to be continuously available to participate in the training. This is advantageous as UEs are not always within good coverage area with respect to the base station.

A data structure for registration with a repository function by an apparatus in a communication network comprises a piece of information X1 indicating whether the apparatus supports a particular learning method, for example the learning method disclosed herewith. In an embodiment, this piece of information is an attribute expressed as a boolean value.

In an embodiment, when the apparatus is a Network Data Analytics Function (NWDAF) as described in 3GPP TS 23.288, this attribute is added to the data structure described in 3GPP TS 29.510 clause 6.1.6.2.76.

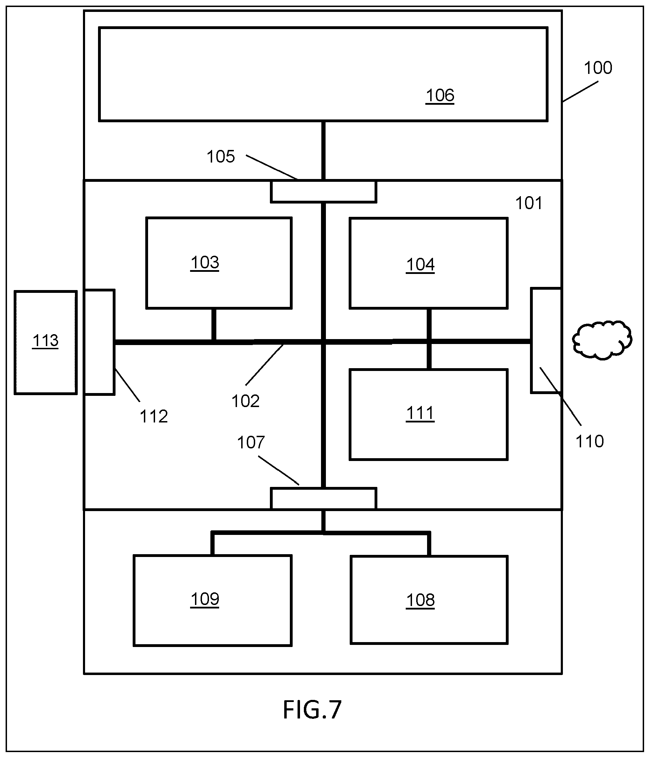

FIG. 7 depicts a high-level block diagram of an apparatus 100 suitable for implementing various aspects of the disclosure. Although illustrated in a single block, in other embodiments the apparatus 100 may also be implemented using parallel and distributed architectures. Thus, for example, various steps such as those illustrated in the apparatus and methods described above by reference to FIG.1 to 6 may be executed using apparatus 100 sequentially, in parallel, or in a different order based on particular implementations.

According to an exemplary embodiment, depicted in FIG.7, apparatus 100 comprises a printed circuit board 101 on which a communication bus 102 connects a processor 103 (e.g., a central processing unit "CPU"), a random access memory 104, a storage medium 111, an interface 105 for connecting a display 106, a series of connectors 107 for connecting user interface devices or modules such as a mouse or trackpad 108 and a keyboard 109, a wireless network interface 110 and a wired network interface 112. Depending on the functionality required, the apparatus may implement only part of the above. Certain modules of FIG.7 may be internal or connected externally, in which case they do not necessarily form integral part of the apparatus itself. For example display 106 may be a display that is connected to the apparatus only under specific circumstances, or the apparatus may be controlled through another device with a display, i.e. no specific display 106 and interface 105 are required for such an apparatus. Memory 111 contains software code which, when executed by processor 103, causes the apparatus 100 to perform the methods described herein. Storage medium 113 is a detachable device such as a USB stick which holds the software code which can be uploaded to memory 111.

The processor 103 may be any type of processor such as a general purpose central processing unit ("CPU") or a dedicated microprocessor such as an embedded microcontroller or a digital signal processor ("DSP").

In addition, apparatus 100 may also include other components typically found in computing apparatus, such as an operating system, queue managers, device drivers, or one or more network protocols that are stored in memory 111 and executed by the processor 103.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A first apparatus for use in a communication network comprising a plurality of apparatus, the first apparatus comprising training means for training a global learning model with a plurality of training iterations, the training means comprising
- means for obtaining roles for a training iteration, for said first apparatus and for at least one other apparatus of the plurality of apparatus in the communication network, amongst at least a training role and a master verifying role, the master verifying role including a verifying role,
- means for obtaining global parameters for the global learning model,
- means for generating a set of local parameters by training the global learning model with local data,
- means for providing the set of local parameters to the at least one other apparatus for which the obtained role is the verifying role, when the role obtained for said first apparatus is the training role,
- means for ranking the sets of local parameters obtained from the at least one other apparatus for which the obtained role is the training role, when the role obtained for said first apparatus is the verifying role,
- means for selecting one or more sets of local parameters based on said ranking, when the role obtained for said first apparatus is the master verifying role,
- means for generating global parameters for a next training iteration from the selected sets of local parameters and for determining roles for the next iteration when the role obtained for said first apparatus is the master verifying role, or in response to obtaining the selected sets of local parameters from the apparatus for which the obtained role is the master verifying role when the role obtained for said first apparatus is the training role.

2. A first apparatus as claimed in claim 1, wherein the means for ranking a set of local parameters obtained from an apparatus for which the obtained role is the training role comprise computing a distance between the set of local parameters generated by said first apparatus and the obtained set of local parameters.

3. A first apparatus as claimed in any of claim 1 or 2, wherein the means for selecting one or more sets of local parameters comprise determining a final ranking from several rankings obtained in relation to the same received set of local parameters, and selecting the sets of local parameters which final ranking meets a selection criterion.

4. A first apparatus as claimed in any of claims 1 to 3, further comprising means for providing the selected set of local parameters to the apparatus for which the obtained role is the training role that generated the set of local parameters with the best ranking, when the role obtained for said first apparatus is the master verifying role.

5. An analytics producer comprising a first apparatus as claimed in any of claims 1 to 4, wherein the global learning model is intended to produce analytics for an analytics aggregator or an analytics consumer in the communication network.

6. A user equipment suitable for sidelink communication comprising a first apparatus as claimed in any of claims 1 to 4, wherein the global learning model is intended to produce data for a base station in the communication network.

7. A method for use in a first apparatus in a communication network comprising a plurality of apparatus, the method comprising training a global learning model with a plurality of training iterations, the training comprising:
- obtaining roles for a training iteration, for the first apparatus and for at least one other apparatus in the communication network, amongst at least a training role and a master verifying role, the master verifying role including a verifying role,
- obtaining global parameters for the global learning model,
- generating a set of local parameters by training the global learning model with local data,
- providing the set of local parameters to the at least one other apparatus for which the obtained role is the verifying role, when the role obtained for said first apparatus is the training role,
- ranking the sets of local parameters obtained from the at least one other apparatus for which the obtained role is the training role, when the role obtained for said first apparatus is the verifying role,
- selecting one or more sets of local parameters based on said ranking, when the role obtained for said first apparatus is the master verifying role,
- generating global parameters for a next training iteration from the selected sets of local parameters and determining roles for the next training iteration when the role obtained for said first apparatus is the master verifying role, or in response to obtaining the selected sets of local parameters from the apparatus for which the obtained role is the master verifying role when the role obtained for said first apparatus is the training role.

8. A method as claimed in claim 1, wherein ranking a set of local parameters obtained from the at least other apparatus for which the obtained role is the training role comprises computing a distance between the set of local parameters generated by said first apparatus and the obtained set of local parameters.

9. A method as claimed in any of claims 7 or 8, wherein selecting one or more sets of local parameters comprises determining a final ranking from several rankings in relation to the same received set of local parameters, and selecting the sets of local parameters which final ranking meets a selection criterion.

10. A method as claimed in any of claims 7 to 9, further comprising providing the selected set of local parameters to the at least one other apparatus for which the obtained role is the training role that generated the set of local parameters with the best ranking, when the role obtained for said first apparatus is the master verifying role.

11. A computer program product comprising a set of instructions which, when executed on an apparatus in a communication network, cause said apparatus to implement the method as claimed in any of claims 7 to 10.

12. An apparatus for use in a communication network, the apparatus comprising means for registering with a repository in the communication network, through a registration message, the registration message comprising a piece of information indicating whether the apparatus supports the method as claimed in any of claims 7 to 10.

13. An apparatus as claimed in claim 12, further comprising means for discovering other apparatus in the communication network that support the method as claimed in any of claims 7 to 10.

14. A data structure for registration with a repository function by an apparatus in a communication network, the data structure comprising a piece of information indicating whether the apparatus supports the method as claimed in any of claims 7 to 10.
